# EUROPÄISCHE PATENTSCHRIFT

(11) **EP 2 978 335 B1**
(45) Veröffentlichungstag und Bekanntmachung des Hinweises auf die Patenterteilung: **03.07.2024**
(21) Anmeldenummer: 14714666.6
(22) Anmeldetag: 28.03.2014
(51) Int. Cl.: A45C 5/02, A45C 13/08, A45C 1/06, A45C 5/03

(54) **AUFBEWAHRUNGSEINRICHTUNG MIT DREIDIMENSIONALEN ERHÖHUNGEN AUF DER AUSSENFLÄCHE**
STORAGE DEVICE WITH THREE-DIMENSIONAL ELEVATIONS ON THE OUTER SURFACE
DISPOSITIF DE RANGEMENT POSSÉDANT DES RELIEFS EN TROIS DIMENSIONS SUR SA SURFACE EXTÉRIEURE

(30) Priorität: 28.03.2013 DE 202013002980 U
(43) Veröffentlichungstag der Anmeldung: 03.02.2016
(73) Patentinhaber: RIMOWA GmbH, 50829 Köln (DE)
(72) Erfinder: MORSZECK, Dieter, 50829 Köln (DE)
(74) Vertreter: dompatent von Kreisler Selting Werner - Partnerschaft von Patent- und Rechtsanwälten mbB
(86) Internationale Anmeldenummer: PCT/EP2014/056266
(87) Internationale Veröffentlichungsnummer: WO 2014/154855

(56) Entgegenhaltungen:
- WO-A1-93/05943
- CN-U- 202 213 407
- DE-A1-102005 006 541
- JP-A- H0 646 911
- US-A- 371 554
- US-A- 3 128 855
- Anonymous: "Paisley St Claire: Suitcases pimped and packed", , 21. September 2009 (2009-09-21), XP055130330, Gefunden im Internet: URL:http://paisleystclaire.typepad.com/mai n/2009/09/suitcases-pimped-and-packed.html [gefunden am 2014-07-18]

## Beschreibung

Die Erfindung betrifft ein Gepäckstück oder ein Portemonnaie nach dem Oberbegriff des Anspruchs 1. Ein Gepäckstück mit rippenförmigen Erhöhungen ist aus Dokument JP-H0646911A bekannt.

Aufbewahrungseinrichtung, wie beispielsweise ein Koffer oder eine Tasche können auf der Außenfläche dreidimensionale Erhebungen aufweisen. Die dreidimensionalen Erhebungen können rippen- bzw. rillenförmig ausgebildet sein. Solche rippen- bzw. rillenförmigen Ausbildungen werden beispielsweise bei Kunststoffkofferschalen bei dem Herstellen der Kofferschale mit ausgeformt.

Es besteht jedoch Bedarf, solche auf den Außenflächen von Aufbewahrungseinrichtungen angeordneten dreidimensionalen Erhöhungen auf besonders einfache und kostengünstige Weise herzustellen.

Der Erfindung liegt die Aufgabe zugrunde, eine Gepäckstück oder Portemonnaie zu schaffen, bei dem auf zumindest einer Außenfläche angeordnete dreidimensionale Erhöhungen vorgesehen werden, die möglichst einfach und kostengünstig herzustellen sind.

Zur Lösung dieser Aufgabe dienen die Merkmale des Anspruchs 1. Die Erfindung sieht in vorteilhafterweise vor, dass die mindestens eine von der Außenfläche abstehende dreidimensionale Erhöhung mindestens zwei aufeinander angeordnete und miteinander verbundene Schichten aufweist. Die zumindest eine Erhöhung ist rippenförmig ausgestaltet.

Dies hat den Vorteil, dass die dreidimensionalen Erhöhungen unabhängig von der Herstellung der Außenfläche hergestellt werden können. Auf diese Weise sind die dreidimensionalen Erhöhungen einfach und kostengünstig herstellen, wobei die Form der dreidimensionalen Erhöhungen variabel ist.

Die von der Außenfläche abstehende Erhöhung ist aus mindestens zwei aufeinander angeordneten und miteinander verbundenen Schichten gebildet.

Die Schichten der zumindest einen Erhöhung sind aufgedruckt. Somit lassen sich sehr schnell und einfach unterschiedliche Formen von Erhöhungen ausbilden.

Die mindestens eine Erhöhung kann mehr als drei aufeinander angeordnete und miteinander verbundene Schichten aufweisen, die aufeinander gedruckt sind.

Die Schichten können aus einem Material bestehen, dass Silikon und/oder eine Keramikpaste aufweisen.

Die einzelnen Schichten können unterschiedlich breit sein.

Die an die Außenfläche angrenzende Schicht der zumindest einen Erhöhung kann die unterste Schicht sein und die von der Außenfläche am weitesten entfernte Schicht der Erhöhung kann die oberste Schicht sein, wobei die Schichten unterschiedlich breit sind und die unterste Schicht breiter ist als die oberste Schicht.

Die Breiten von mehreren übereinander angeordneten Schichten von der untersten Schicht zu der obersten Schicht können vorzugsweise kontinuierlich abnehmen.

Die Schichten können mittels eines Offsetdrucks oder Siebdrucks oder eines 3D-Druckverfahrens aufgedruckt werden.

Es können mehrere Erhöhungen auf der Außenfläche angeordnet sein, die vorzugsweise gleichmäßig verteilt auf der Außenfläche angeordnet sind.

Die rippenförmige Erhöhung kann in Längsrichtung der rippenförmigen Erhöhung eine variierende bzw. variable Höhe aufweisen, wobei der mittlere Bereich der rippenförmigen Erhöhung höher ist als die Randbereiche der rippenförmigen Erhöhung.

Die Schichtdicken der rippenförmigen Erhöhungen können in Längsrichtung der rippenförmigen Erhöhungen variieren. D. h. die einzelnen Schichten können jeweils unterschiedliche Farben aufweisen.

Die Farben der einzelnen Schichten der Erhöhung können variieren.

Es kann eine zusätzliche Außenschicht vorgesehen sein, die auf den Erhöhungen und vorzugsweise auch auf der Außenfläche der Aufbewahrungseinrichtung angeordnet ist.

Die zusätzliche Außenschicht kann mindestens eine mittels eines Thermoformverfahrens eingebrachte dreidimensionale Erhebung aufweisen, die der Form der auf der Außenfläche angeordneten, mindestens einen dreidimensionalen Erhöhungen angepasst ist. Die zusätzliche Außenschicht kann aus Kunststoff, Leder oder einem Textilstoff bestehen.

Die Aufbewahrungseinrichtung kann ein Gepäckstück sein, das zwei Hauptflächen und vier Seitenflächen aufweist, wobei zumindest eine der Hauptflächen rippenförmige Erhöhungen aufweist, wobei die Längsrichtung der rippenförmigen Erhöhung parallel zu der Längsrichtung der Hauptfläche verläuft. Die Aufbewahrungseinrichtung kann insbesondere ein Koffer sein.

Es kann ein Verfahren zum Aufbringen von mindestens einer Erhöhung auf zumindest einer Außenfläche einer Aufbewahrungseinrichtung, insbesondere eines Gepäckstücks oder eines Portemonnaies, vorgesehen sein, wobei das Verfahren die folgenden Schritte aufweist:
- Aufbringen, insbesondere Drucken, einer ersten Schicht auf die Außenfläche einer Außenwand einer Aufbewahrungseinrichtung,
- Aufbringen, insbesondere Drucken, einer zweiten Schicht auf die erste Schicht zum Bilden einer dreidimensionalen Erhöhung,
- vorzugsweise Aufbringen von weiteren Schichten auf die zweite Schicht.

Im Folgenden werden unter Bezugnahme auf die Zeichnungen Ausführungsbeispiele der Erfindung näher erläutert.

Es zeigen schematisch:
- Fig. 1: eine als Gepäckstück ausgebildete Aufbewahrungseinrichtung mit dreidimensionalen Erhöhungen auf der Außenfläche,
- Fig. 2: eine als Tasche ausgebildete Aufbewahrungseinrichtung,
- Fig. 3: die Aufbewahrungseinrichtung aus Fig. 2 in der Seitenansicht,
- Fig. 4: dreidimensionale Erhöhungen auf der Außenfläche einer Aufbewahrungseinrichtung,
- Fig. 5: die Erhöhungen auf der Außenfläche aus Fig. 4,
- Fig. 6: eine alternative Ausgestaltung der dreidimensionalen Erhöhungen,
- Fig. 7: eine weitere alternative Ausgestaltung der dreidimensionalen Erhöhungen,
- Fig. 8: dreidimensionale Erhöhungen mit zusätzlicher Außenschicht.
- Fig. 9: Thermoformanlage zum Einbringen von dreidimensionaler Erhebung in die Außenschicht.

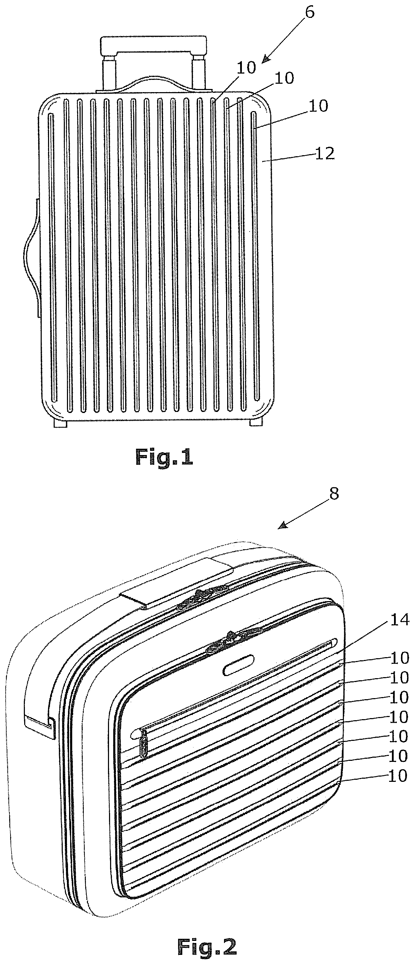

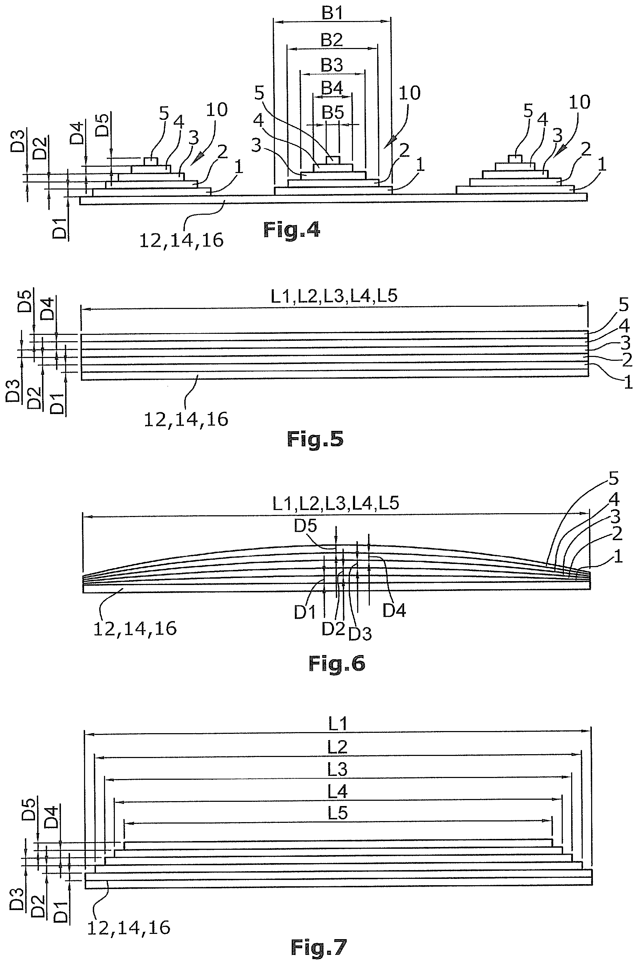

Fig. 1 zeigt eine als Koffer 6 ausgestaltete Aufbewahrungseinrichtung. Der Koffer 6 ist ein Gepäckstück. Der Koffer 6 weist zumindest eine Außenfläche 12 auf, auf der dreidimensionale Erhöhungen 10 angeordnet sind, die gegenüber der Außenfläche 12 nach außen hin abstehen. Die dreidimensionalen Erhöhungen 10 sind rippenförmig ausgestaltet. Die Ausgestaltung der dreidimensionalen Erhöhungen 10 ist in den Figuren 4 - 8 näher dargestellt. Der Koffer kann ein Hartschalenkoffer insbesondere aus Aluminium oder aus Kunststoff, z. B. PE, bestehen.

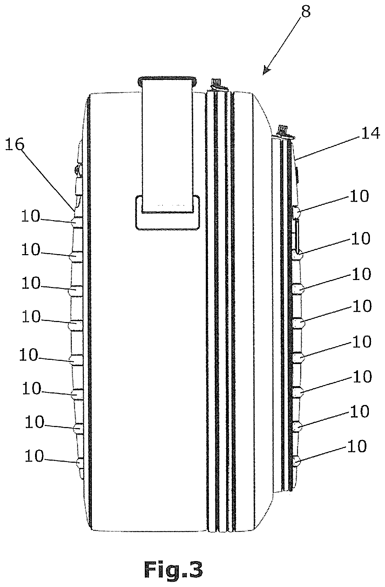

Fig. 2 zeigt eine als Tasche 8 ausgebildete Aufbewahrungseinrichtung. Die Tasche 8 weist zumindest eine Außenfläche 14 und eine Außenfläche 16 auf, die die Vorder- bzw. die Rückseite der Tasche 8 bilden. Auf zumindest einer Außenfläche 14, 16 sind abstehende dreidimensionale Erhöhungen 10 angeordnet. Die dreidimensionalen Erhöhungen 10 sind rippenförmig ausgestaltet. Es sind eine Vielzahl von dreidimensionalen Erhöhungen 10 auf der Außenfläche 14 bzw. 16 angeordnet, wobei diese parallel nebeneinander verlaufen. In Fig. 3 ist die Tasche 8 in der Seitenansicht dargestellt.

Die in den Figuren 1, 2 und 3 dargestellten Aufbewahrungseinrichtungen, d. h. der Koffer 6 und die Tasche 8, können jeweils nur auf einer Außenfläche 12, 14 dreidimensionale Erhöhungen 10 aufweisen. Alternativ können der Koffer 6 und die Tasche 8 auch auf zwei oder mehr Außenflächen dreidimensionale Erhöhungen aufweisen.

Bevorzugt weist der Koffer 6 aus Fig. 1 auf allen Außenflächen dreidimensionale Erhöhungen auf.

Vorzugsweise sind auf den jeweiligen Außenflächen 12, 14, 16 mehrere dreidimensionale 10 Erhöhungen angeordnet, wobei diese dreidimensionale Erhöhungen 10 vorzugsweise rippenförmig ausgebildet sind und die rippenförmigen dreidimensionalen Erhöhungen 10 sind vorzugsweise parallel nebeneinander und im gleichmäßigen Abstand voneinander angeordnet. Die dreidimensionalen Erhöhungen 10 können auch auf der Außenfläche eines Portemonnaies angeordnet sein.

Die Ausgestaltung der dreidimensionalen Erhöhungen 10 der Aufbewahrungseinrichtung aus den Figuren 1 - 3 ist in den Figuren 4 - 8 näher dargestellt.

Die dreidimensionalen Erhöhungen weisen mindestens zwei aufeinander angeordnete und miteinander verbundene Schichten auf. In den Figuren 1 - 3 sind die dreidimensionalen Erhöhungen nur schematisch dargestellt. Daher sind die einzelnen Schichten in den Figuren 1 - 3 nicht zu erkennen.

In Fig. 4 sind dreidimensionale Erhöhungen 10 dargestellt. Dreidimensional bedeutet, dass die Erhöhungen eine Breite B, eine Höhe H und eine Länge L aufweisen. Die dreidimensionalen Erhöhungen 10 sind sowohl auf der Außenfläche 12 des Koffers 6 als auch auf den Außenflächen 14, 16 der Tasche 8 angeordnet. Die dreidimensionalen Erhöhungen 10 weisen fünf aufeinander angeordnete und miteinander verbundene Schichten 1 - 5 auf. Die aufeinander angeordneten und miteinander verbundenen Schichten 1 - 5 werden mittels eines Druckverfahrens auf der Außenfläche 14, 16, 12 angeordnet. Dazu wird eine erste Schicht 1 auf die Außenfläche 12, 14, 16 gedruckt. Diese erste Schicht 1 bildet die unterste Schicht und ist die an die der Außenfläche 12, 14, 16 angrenzende Schicht. Anschließend wird eine zweite Schicht 2 auf die erste Schicht 1 gedruckt. Auf die zweite Schicht 2 wird wiederum die dritte Schicht 3, auf die dritte Schicht 3 wird die vierte Schicht 4 und auf die vierte Schicht 4 wird die fünfte Schicht 5 gedruckt. Die fünfte Schicht 5 bildet in dem dargestellten Ausführungsbeispiel die oberste Schicht und ist die von der Außenfläche 12, 14, 16 am weitesten entfernteste Schicht. Die dreidimensionale Erhöhung kann auch eine andere Anzahl von Schichten aufweisen. Dreidimensional bedeutet, dass die Erhöhungen eine Breite B, eine Höhe H und eine Länge L aufweisen.

Dadurch, dass die Schichten auf die Außenfläche 12, 14, 16 gedruckt werden und die dreidimensionale Erhöhung 10 aus mehreren Schichten 1 - 5 besteht, kann die dreidimensionale Erhöhung jede beliebige Form aufweisen. Auf diese Weise können in einem Produktionsprozess die Form und die Ausgestaltung der dreidimensionalen Erhöhung beliebig verändert und angepasst werden.

Bevorzugt sind die dreidimensionalen Erhöhungen 10 als rippenförmige Erhöhungen ausgestaltet, wobei die rippenförmigen Erhöhungen 10 konisch zulaufend sind. Dies wird dadurch realisiert, dass die aufeinander angeordnet und miteinander verbundenen Schichten 1 - 5, wie in Fig. 4 dargestellt, jeweils eine unterschiedliche Breite aufweisen. Die unterste Schicht 1 weist dabei die breiteste Breite B1 auf. Die oberste Schicht 5 weist dabei die geringste Breite B5 auf. Die Breiten B2 - B4 der dazwischen liegenden Schichten 2 - 4 liegen jeweils zwischen der Breite B1 und B5 und werden je Schicht immer geringer, so dass die Breite der dreidimensionalen Erhöhungen 10 gleichmäßig mit der Höhe abnimmt. Auch können die unterschiedlichen Schichten 1 - 5 unterschiedliche Farben aufweisen. Mittels der Farben kann die Ausgestaltung der dreidimensionalen Erhöhungen erheblich beeinflusst werden. Es können zum Beispiel mittels dunkler Farben Schatten dargestellt werden und die Kontur der dreidimensionalen Erhöhungen 10 kann besonders hervorgehoben werden. Es kann beispielsweise die unterste Schicht 1 die dunkelste Farbe aufweisen. Auch können die dreidimensionalen Erhöhungen 10 andere Farben aufweisen als die Außenfläche 12, 14, 16 der Aufbewahrungseinrichtung.

Da die Schichten aufgedruckt werden, können die Farben auch leicht verändert werden und es können auf einfache Art und Weise Aufbewahrungseinrichtungen mit unterschiedlich gefärbten dreidimensionalen Erhöhungen hergestellt werden.

Die in Fig. 4 dargestellten dreidimensionalen Erhöhungen sind in Fig. 5 in der Seitenansicht dargestellt. Wie aus Fig. 5 zu entnehmen ist, sind die Längen L1, L2, L3, L4, L5 der Schichten 1 - 5 gleich lang. Auch weisen die in Fig. 5 und Fig. 4 dargestellten Schichten 1 -5 dieselbe Dicke D1, D2, D3, D4, D5 auf.

Die Dicke D1 - D5 und die Länge L1 - L5 der dreidimensionalen Schichten können jedoch auch variieren. Die einzelnen Schichten 1 - 5 können somit unterschiedliche Längen L1 - L5 und/ oder unterschiedliche Dicken D1 - D5 aufweisen. Auf diese Weise kann die Ausgestaltung der dreidimensionalen Erhöhung 10 leicht verändert werden.

In Fig. 6 ist ein Ausführungsbeispiel dargestellt, bei dem die Dicke D1 - D5 der einzelnen Schichten 1 - 5 über die Länge L1 -L5 variieren. Im mittleren Bereich der rippenförmigen, länglich ausgebildeten dreidimensionalen Erhöhungen sind die Dicken D1 - D5 wesentlich dicker, als in den Randbereichen. Auf diese Weise läuft die dreidimensionale Erhöhung in den Randbereichen aus.

Alternativ können die einzelnen Schichten 1 - 5 auch jeweils eine unterschiedliche Länge L1 - L5 aufweisen. In Fig. 7 ist ein Ausführungsbeispiel dargestellt, bei dem die unterste Schicht 1 die längste Länge L1 aufweist und die oberste Schicht 5 die kürzeste Länge L5 aufweist. Die dazwischenliegenden Schichten 2- 4 weisen Längen L2 - L4 auf, die entsprechend zwischen den Längen L1 und L5 liegen.

Die in Fig. 7 dargestellte dreidimensionale Erhöhung 10 läuft auch zu den Randbereichen hin aus.

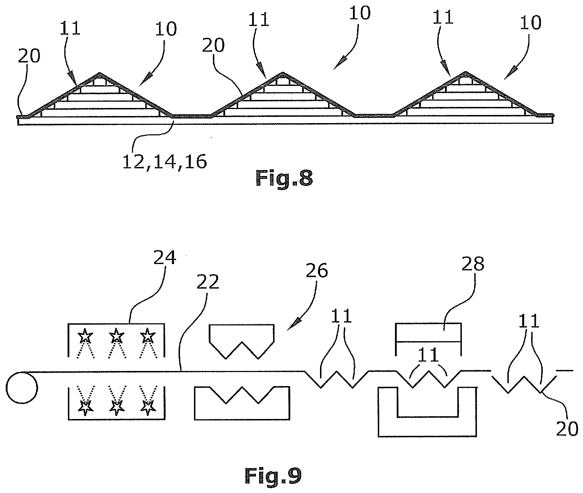

In Fig. 8 ist ein weiteres Ausführungsbeispiel dargestellt, bei dem auf den dreidimensionalen Erhöhungen 10 und auf der Außenfläche 12, 14, 16 eine zusätzliche Außenschicht 20 angeordnet ist. Die Außenschicht 20 weist dreidimensionale Erhebungen 11 auf, die den dreidimensionalen Erhöhungen 10 entsprechen. Die zusätzliche Außenschicht 20 ist mit den dreidimensionalen Erhebungen 11 auf den dreidimensionalen Erhöhungen 10 angeordnet. Die zusätzliche Außenfläche 20 ist vorzugsweise auf der Außenfläche 12, 14, 16 und/oder auf den dreidimensionalen Erhöhungen 10 mittels einer Klebeschicht befestigt.

Die dreidimensionalen Erhebungen 11 der zusätzlichen Außenschicht 20 können bereits vor dem Aufbringen auf die Außenfläche 12, 14, 16 und den dreidimensionalen Erhöhungen 10 in die Außenschicht 20 eingebracht worden sein. Dies kann z. B. mittels eines Thermoformverfahrens erfolgen. Bei einem Thermoformverfahren wird, wie in Fig. 9 dargestellt, eine bandförmige Schicht 22 von einer Rolle abgerollt und mittels eines Heizofens 24 erwärmt. In einer Formgebungseinrichtung 26 wird die Form, in diesem Fall die dreidimensionalen Erhebungen 11 in die bandförmige Schicht 22 eingebracht. In einer danach anschließenden Stanzeinrichtung 28 wird die bandförmige Schicht in Einzelelemente unterteilt, die in diesem Fall die zusätzliche Außenschicht 20 bilden und von den Außenabmessungen her der Außenfläche 12, 14, 16 entsprechen.

Alternativ kann das Thermoformverfahren auch mit Plattenwaren ausgeführt werden. Dabei werden Platten, die bereits eine bestimmte Abmessung aufweisen, einzeln erwärmt und geformt.

Mittels der zusätzlichen Außenschicht 20 kann eine hochwertige Oberfläche auf die Außenfläche und/oder die Erhöhungen 10 aufgebracht werden.

## Patentansprüche

1. Gepäckstück oder Portemonnaie, mit
- zumindest einer Außenfläche (12, 14, 16), wobei auf der zumindest einen Außenfläche (12, 14, 16) zumindest eine von der Außenfläche (12) abstehende dreidimensionale Erhöhung (10) angeordnet ist,
wobei die von der Außenfläche (12, 14, 16) abstehende dreidimensionale Erhöhung (10) mindestens zwei aufeinander angeordnete und miteinander verbundene Schichten (1, 2, 3, 4, 5) aufweist, wobei die zumindest eine Erhöhungen (10) rippenförmig ausgestaltet ist, **dadurch gekennzeichnet, dass** die Schichten (1, 2, 3, 4, 5) der zumindest einen Erhöhung aufgedruckt sind.

2. Gepäckstück oder Portemonnaie nach Anspruch 1, **dadurch gekennzeichnet, dass** die mindestens eine Erhöhung (10) mehr als drei aufeinander angeordnete und miteinander verbundene Schichten (1, 2, 3, 4, 5) aufweist, die aufeinander gedruckt sind.

3. Gepäckstück oder Portemonnaie nach einem der Ansprüche 1 bis 2, **dadurch gekennzeichnet, dass** die Schichten (1, 2, 3, 4, 5) aus einem Material bestehen, das Silikon und/oder eine Keramik-Paste aufweist.

4. Gepäckstück oder Portemonnaie nach einem der Ansprüche 1 bis 3, **dadurch gekennzeichnet, dass** die an die Außenfläche (12, 14, 16) angrenzende Schicht (1) der zumindest einer Erhöhung (10) die unterste Schicht ist und die der Außenfläche (12, 14, 16) am weitesten entfernte Schicht (5) der Erhöhung (10) die oberste Schicht ist, wobei die Schichten (1, 2, 3, 4, 5) unterschiedlich breit sind und die unterste Schicht (1) breiter ist als die oberste Schicht (5).

5. Gepäckstück oder Portemonnaie nach Anspruch 4, **dadurch gekennzeichnet, dass** die Breiten (B1, B2, B3, B4, B5) von mehreren übereinander angeordneten Schichten (1, 2, 3, 4, 5) von der untersten Schicht (1) zu der obersten Schicht (5), vorzugsweise kontinuierlich abnehmen.

6. Gepäckstück oder Portemonnaie nach einem der Ansprüche 1 bis 5, **dadurch gekennzeichnet, dass** die Schichten (1, 2, 3, 4, 5) mittels eines Offset-Druck- oder Siebdruck oder 3D-Druckverfahren aufgedruckt werden.

7. Gepäckstück oder Portemonnaie nach einem der Ansprüche 1 bis 6, **dadurch gekennzeichnet, dass** mehrere Erhöhungen (10) auf der Außenfläche (12, 14, 16) angeordnet sind, die vorzugsweise gleichmäßig verteilt auf der Außenfläche (12, 14, 16) angeordnet sind.

8. Gepäckstück oder Portemonnaie nach einem der Ansprüche 1 bis 7, **dadurch gekennzeichnet, dass** die rippenförmige Erhöhung (10) in Längsrichtung der rippenförmigen Erhöhungen (10) eine variierende Höhe aufweist, wobei der mittlere Bereich der rippenförmigen Erhöhung (10) höher ist als die Randbereiche der rippenförmigen Erhöhung (10).

9. Gepäckstück oder Portemonnaie nach einem der Ansprüche 1 bis 8, **dadurch gekennzeichnet, dass** die einzelnen Schichtdicken (D1, D2, D3, D4, D5) der rippenförmigen Erhöhung (10) in Längsrichtung der rippenförmigen Erhöhung (10) variieren.

10. Gepäckstück oder Portemonnaie nach einem der Ansprüche 1 bis 9, **dadurch gekennzeichnet, dass** die Farben der einzelnen Schichten (1, 2, 3, 4, 5) der Erhöhung (10) variieren.

11. Gepäckstück oder Portemonnaie nach einem der Ansprüche 1 bis 9, **dadurch gekennzeichnet, dass** eine zusätzliche Außenschicht (20) vorgesehen ist, die auf den Erhöhungen (10) und vorzugsweise auch auf der Außenfläche (12, 14, 16) der Aufbewahrungseinrichtung angeordnet ist.

12. Gepäckstück oder Portemonnaie nach Anspruch 11, **dadurch gekennzeichnet, dass** die zusätzliche Außenschicht (20) mindestens eine mittels eines Thermoform-Verfahrens eingebrachte dreidimensionale Erhebung (11) aufweist, die der Form der auf der Außenfläche (12, 14, 16) angeordneten mindestens einen dreidimensionalen Erhöhung (10) angepasst ist.

13. Gepäckstück nach einem der Ansprüche 1 bis 12, **dadurch gekennzeichnet, dass** das Gepäckstück zwei Hauptflächen und vier Seitenflächen aufweist, wobei zumindest eine der Hauptflächen rippenförmige Erhöhung (10) aufweist, wobei die Längsrichtung der rippenförmigen Erhöhung (10) parallel zu der Längsrichtung der Hauptflächen verläuft.

## Claims

1. An item of luggage or wallet comprising
- at least one outer surface (12, 14, 16), wherein at least one three-dimensional elevation (10) protruding from the outer surface (12) is arranged on the at least one outer surface (12, 14, 16),
- wherein the three-dimensional elevation (10) protruding from the outer surface (12, 14, 16) comprises at least two stacked layers (1, 2, 3, 4, 5) connected to each other, wherein the at least one elevation (10) is rip-shaped, **characterized in that** the layers (1, 2, 3, 4, 5) of the at least one elevation are imprinted.

2. The item of luggage or wallet according to claim 1, **characterized in that** the at least one elevation (10) comprises more that three stacked layers (1, 2, 3, 4, 5) connected to each other, which are printed on top of each other.

3. The item of luggage or wallet according to any of claims 1 to 2, **characterized in that** the layers (1, 2, 3, 4, 5) consist of a material including silicone and/or a ceramic paste.

4. The item of luggage or wallet according to any of claims 1 to 3, **characterized in that** the layer (1) of the at least one elevation (10) adjacent to the outer surface (12, 14, 16) is the bottom layer, and that the layer (5) of the elevation (10) farthest away from the outer surface (12, 14, 16) is the top layer, wherein the layers (1, 2, 3, 4, 5) have different widths and the bottom layer (1) is wider than the top layer (5).

5. The item of luggage or wallet according to claim 4, **characterized in that** the widths (B1, B2, B3, B4, B5) of several stacked layers (1, 2, 3, 4, 5) preferably continuously decrease from the bottom layer (1) to the top layer (5).

6. The item of luggage or wallet according to any one of claims 1 to 5, **characterized in that** the layers (1, 2, 3, 4, 5) are imprinted by means of an offset printing or screen printing or 3D printing method.

7. The item of luggage or wallet according to any one of claims 1 to 6, **characterized in that** several elevations (10) are arranged on the outer surface (12, 14, 16), which are preferably evenly distributed on the outer surface (12, 14, 16).

8. The item of luggage or wallet according to any one of claims 1 to 7, **characterized in that** the rip-shaped elevation (10) has a varying height in the longitudinal direction of the rip-shaped elevations (10), wherein the central area of the rip-shaped elevation (10) is higher than the edge areas of the rip-shaped elevation (10).

9. The item of luggage or wallet according to any one of claims 1 to 8, **characterized in that** the individual layer thicknesses (D1, D2, D3, D4, D5) of the rip-shaped elevation (10) vary in the longitudinal direction of the rip-shaped elevation (10).

10. The item of luggage or wallet according to any one of claims 1 to 9, **characterized in that** the colors of the individual layers (1, 2, 3, 4, 5) of the elevation (10) vary.

11. The item of luggage or wallet according to any one of claims 1 to 9, **characterized in that** an additional outer layer (20) is provided, which is arranged on the elevations (10) and preferably also on the outer surface (12, 14, 16) of the storage device.

12. The item of luggage or wallet according to claim 11, **characterized in that** the additional outer layer (20) comprises at least one three-dimensional elevation (11) introduced by means of a thermoforming method, which elevation (11) is adapted to the shape of the at least one three-dimensional elevation (10) arranged on the outer surface (12, 14, 16).

13. The item of luggage or wallet according any one of claims 1 to 12, **characterized in that** the item of luggage comprises two main surfaces and four side surfaces, wherein at least one of the main surfaces has rip-shaped elevations (10), wherein the longitudinal direction of the rip-shaped elevation (10) is parallel to the longitudinal direction of the main surfaces.

## Revendications

1. Bagage ou porte-monnaie, comportant
- au moins une surface extérieure (12, 14, 16), dans lequel est disposé, sur l'au moins une surface extérieure (12, 14, 16), au moins un relief (10) tridimensionnel faisant saillie depuis la surface extérieure (12),
dans lequel
le relief (10) tridimensionnel faisant saillie depuis la surface extérieure (12, 14, 16) présente au moins deux couches (1, 2, 3, 4, 5) disposées l'une sur l'autre et reliées entre elles, dans lequel l'au moins un relief (10) est réalisé en forme de nervure, **caractérisé en ce que** les couches (1, 2, 3, 4, 5) de l'au moins un relief sont imprimées.

2. Bagage ou porte-monnaie selon la revendication 1,
**caractérisé en ce que** l'au moins un relief (10) présente plus de trois couches (1, 2, 3, 4, 5) disposées les unes sur les autres et reliées entre elles, lesquelles sont imprimées les unes sur les autres.

3. Bagage ou porte-monnaie selon l'une des revendications 1 à 2,
**caractérisé en ce que** les couches (1, 2, 3, 4, 5) sont constituées d'un matériau qui présente du silicone et/ou une pâte céramique.

4. Bagage ou porte-monnaie selon l'une des revendications 1 à 3,
**caractérisé en ce que** la couche (1) de l'au moins un relief (10) qui est adjacente à la surface extérieure (12, 14, 16) est la couche la plus basse, et la couche (5) du relief (10) qui est la plus éloignée de la surface extérieure (12, 14, 16) est la couche la plus haute, dans lequel les couches (1, 2, 3, 4, 5) sont de largeurs différentes et la couche la plus basse (1) est plus large que la couche la plus haute (5).

5. Bagage ou porte-monnaie selon la revendication 4,
**caractérisé en ce que** les largeurs (B1, B2, B3, B4, B5) de plusieurs couches (1, 2, 3, 4, 5) disposées les unes au-dessus des autres décroissent, de préférence de manière continue, à partir de la couche la plus basse (1) vers la couche la plus haute (5).

6. Bagage ou porte-monnaie selon l'une des revendications 1 à 5,
**caractérisé en ce que** les couches (1, 2, 3, 4, 5) sont imprimées au moyen d'une impression offset ou d'une impression par sérigraphie ou d'un procédé d'impression 3D.

7. Bagage ou porte-monnaie selon l'une des revendications 1 à 6,
**caractérisé en ce que** plusieurs reliefs (10) sont disposés sur la surface extérieure (12, 14, 16), lesquels sont disposés de préférence avec une répartition uniforme sur la surface extérieure (12, 14, 16).

8. Bagage ou porte-monnaie selon l'une des revendications 1 à 7,
**caractérisé en ce que** le relief (10) en forme de nervure présente une hauteur variable dans la direction longitudinale des reliefs (10) en forme de nervure, dans lequel la zone centrale du relief (10) en forme de nervure est plus haute que les zones périphériques du relief (10) en forme de nervure.

9. Bagage ou porte-monnaie selon l'une des revendications 1 à 8,
**caractérisé en ce que** les épaisseurs de couche (D1, D2, D3, D4, D5) individuelles du relief (10) en forme de nervure varient dans la direction longitudinale du relief (10) en forme de nervure.

10. Bagage ou porte-monnaie selon l'une des revendications 1 à 9,
**caractérisé en ce que** les couleurs des couches (1, 2, 3, 4, 5) individuelles du relief (10) varient.

11. Bagage ou porte-monnaie selon l'une des revendications 1 à 9,
**caractérisé en ce qu'**une couche extérieure supplémentaire (20) est prévue, laquelle est disposée sur les reliefs (10) et de préférence également sur la surface extérieure (12, 14, 16) du dispositif de rangement.

12. Bagage ou porte-monnaie selon la revendication 11,
**caractérisé en ce que** la couche extérieure supplémentaire (20) présente au moins un bossage (11) tridimensionnel obtenu au moyen d'un procédé de thermoformage, lequel bossage est ajusté à la forme de l'au moins un relief (10) tridimensionnel disposé sur la surface extérieure (12, 14, 16).

13. Bagage selon l'une des revendications 1 à 12, **caractérisé en ce que** le bagage présente deux surfaces principales et quatre surfaces latérales, dans lequel au moins l'une des surfaces principales présente un relief (10) en forme de nervure, dans lequel la direction longitudinale du relief (10) en forme de nervure s'étend parallèlement à la direction longitudinale des surfaces principales.
